# EUROPEAN PATENT SPECIFICATION

(11) **EP 3 251 502 B1**
(45) Date of publication and mention of the grant of the patent: **03.07.2019**
(21) Application number: 16172014.9
(22) Date of filing: 30.05.2016
(51) Int. Cl.: A01K 63/00, A01K 63/10

(54) **DEVICE FOR CLEANING AQUARIUM WINDOWS**
VORRICHTUNG ZUR REINIGUNG VON AQUARIENFENSTERN
DISPOSITIF DE NETTOYAGE DE VITRES D'AQUARIUM

(43) Date of publication of application: 06.12.2017
(73) Proprietor: Bakker Holding Son B.V., 5692 EL Son (NL)
(72) Inventor: Bergmans, Hans, 5553 CR Valkenswaard (NL)
(74) Representative: Cohausz & Florack

(56) References cited:
- WO-A1-2016/013036
- DE-U1-202009 000 764
- US-A1- 2002 112 303
- US-A1- 2009 211 533
- US-A1- 2010 083 983
- US-A1- 2010 116 217
- US-A1- 2011 056 437
- US-A1- 2014 261 211

## Description

The invention relates to a device for cleaning aquarium windows, in particular the inside thereof, comprising an interior element, which is to be placed on the inside of the aquarium window, and an exterior element, which is to be placed on the outside of the aquarium window, which interior and exterior elements attract each other under the influence of magnetic force, so that movement of the exterior element along the aquarium window causes the interior element to follow this movement.

Such devices for cleaning aquarium windows are known in the art, for example from WO 00/40080 A1. With such a device, an aquarium owner may clean the window of his aquarium whenever it becomes murky, for example every one or two days. In the meantime, the aquarium window cleaning device is usually removed from the aquarium and stored in a separate place.

Removing the device from the aquarium after each cleaning is however an extra effort many aquarium owners would like to spare. Leaving the cleaning device attached to the aquarium window is however an unattractive alternative since an aquarium window is usually already equipped with a lot of different other devices such as thermometers, instruments and components for controlling or influencing the water quality, the water temperature, the pH value or the like. All these devices cover parts of the aquarium window and therewith reduce the area of the window through which fishes or the like may be observed, which is particularly problematic for small aquariums. Furthermore, a large number of components attached to the aquarium window are aesthetically unpleasant.

Furthermore, a single device for cleaning aquarium windows is often not sufficient for the needs of aquarium owners. Therefore, many aquarium owners have to buy several cleaning devices for different types of aquarium windows or different degrees of contamination.

From the prior art, a magnetically-coupled fish food dispenser is known from US 2014/261211 A1. A small and flexible magnetically coupled aquarium cleaning device is known from US 2009/211533 A1. Aquarium cleaning devices with integral or mechanically coupled elements with extra functionality are known from US 2010/116217 A1, DE 20 2009 000764 U1 and US 2010/083983 A1. A support device for aquarium accessories is known from WO 2016/013036 A1.

The object of the present invention is to overcome at least some of the problems named above.

With a device according to claim 1 for cleaning aquarium windows, in particular the inside thereof, comprising an interior element with a housing, which interior element is to be placed on the inside of the aquarium window, and an exterior element, which is to be placed on the outside of the aquarium window, which interior and exterior elements are each equipped with magnets and/or magnetic elements, wherein, in the interior element, such magnets and/or magnetic elements are arranged inside the housing and close to the side for attaching the interior element to the aquarium window, said magnets and/or magnetic elements of the interior and exterior elements being arranged such that the interior and exterior elements attract each other under the influence of magnetic force, so that movement of the exterior element along the aquarium window causes the interior element to follow this movement, wherein the interior element comprises an air chamber and is so constructed that, once the magnetic force has been removed, the interior element will remain afloat on the liquid medium that is present in the aquarium, the object named above is at least in part solved in that the interior element is configured such that an accessory part may be attached to the interior element by magnetic force on a side of the interior element different to the side for attaching the interior element to the aquarium window, wherein the interior element comprises a magnet or magnetic element arranged within the housing such that it is invisible from the outside, wherein the magnet or magnetic element is arranged at a side different to the side for attaching the interior element to the aquarium window.

Herein is also disclosed but not claimed : an accessory part for being attached to the interior element of a device as described above, wherein the accessory part is configured such that it may be attached to the interior element of the device by magnetic force on a side of the interior element different to the side for attaching the interior element to the aquarium window.

The object named above is further at least in part solved according to the invention by a kit of parts according to claim 3 comprising a device as described above and an accessory part as described above, wherein the accessory part is adapted to the device in such a way that the accessory part may be attached by magnetic force to the interior element on a side of the interior element different to the side for attaching the interior element to the aquarium window.

It was found that a device for cleaning aquarium windows may advantageously be used for different purposes, in particular when the device is not in use for cleaning the aquarium window. In this way, the cleaning device may remain in the aquarium between two cleaning actions without uselessly occupying space of the aquarium window. It was furthermore found that this may achieved in a very versatile, user-friendly and optically appealing manner by providing a device for cleaning aquarium windows on the one hand and an accessory part on the other hand that may be coupled magnetically. In that way, the device for cleaning aquarium windows may be equipped with extra functionality by the accessory part. In this way, an aquarium owner also does not need to buy several different devices but may use a single device with according accessory parts providing the functionality needed.

The extra functionality with which the device for cleaning aquarium windows may be equipped also allows dispensing with separate aquarium equipment thereby reducing the number of individual devices that have to be attached to the aquarium window.

The interior element of the device is configured such that an accessory part may be attached to the interior element by magnetic force on a side of the interior element different to the side for attaching the interior element to the aquarium window. The side for attaching the interior element to the aquarium window is the side of the interior element provided for being in contact with the aquarium window. This side of the interior element is usually equipped or equippable with a felt or fabric to provide a suitable surface for cleaning the aquarium window.

For example, the interior element of the device may have a cuboid-like shape with a side for attaching the interior element to an aquarium window, an opposite back side and two long and two short lateral sides. The back side and the two long and two short lateral sides are accordingly sides different to the side for attaching the interior element to the aquarium window.

The accessory part is attachable to the interior element by magnetic force on a side of the interior element different to the side for attaching the interior element to the aquarium window. In this way, the side for attaching the interior element to the aquarium window remains free of the accessory part so that the interior element may still be attached to the aquarium window when the accessory part is attached to the interior element.

The accessory part is accordingly configured such that it may be attached to the interior element of the device by magnetic force on a side of the interior element different to the side for attaching the interior element to the aquarium window. In particular, in the kit of parts, the accessory part is adapted to the device in such a way that the accessory part may be attached by magnetic force to the interior element on a side of the interior element different to the side for attaching the interior element to the aquarium window. To this end, the dimensions of the accessory part are adapted to the interior element. Furthermore, the dimensions and the position of a magnet or magnetic element of the accessory part are in particular adapted to the interior element.

In the following, several embodiments of the device, of the accessory part and of the kit of parts will be described. These embodiments are applicable for the device, for the accessory part and for the kit of parts alike and may also be combined with each other.

The interior element comprises a magnet or magnetic element arranged such that an accessory part comprising a corresponding magnetic element or magnet may be attached to the interior element by magnetic force on a side of the interior element different to the side for attaching the interior element to the aquarium window. To this end and according to the invention, the magnet or magnetic element is arranged at a side different to the side for attaching the interior element to the aquarium window.

The magnet is preferably a permanent magnet, for example from AlNiCo, SmCo, a NdFeB-alloy, a NiFe-alloy or a NiFeCo-alloy. The magnetic element is from a material that is attractable by a magnetic, such as Fe or ferromagnetic steel.

According to corresponding embodiments of the accessory part and the kit of parts, the accessory part comprises a magnetic element or magnet corresponding to a magnet or magnetic element of the device so that the accessory part may be attached by magnetic force to the interior element on a side of the interior element different to the side for attaching the interior element to the aquarium window. In this way, the interior element and a corresponding accessory part may be attached to each other securely by magnetic force.

According to the invention, the interior element comprises a housing and the magnet or magnetic element is arranged within the housing. In such a way and according to the invention, the magnet or magnetic element can be hidden within the housing so that it is not visible from the outside, in particular when no accessory part is attached to the interior element. This gives the interior element an optically appealing appearance. The magnet or magnetic element may be arranged inside the housing or within a wall of the housing.

According to a further embodiment, the magnet or magnetic element is arranged on a lateral side or on the back-side of the interior element. The back side is the side of the interior element that is opposite to the side for attaching the interior element to the aquarium window. A lateral side is a side of the interior element that runs inclined, preferably essentially perpendicular to the side for attaching the interior element to the aquarium window.

According to the invention, the interior element is so constructed that, once the magnetic force has been removed, the interior element will remain afloat on the liquid medium that is present in the aquarium. Such buoyant devices for cleaning aquarium windows are generally known in the art. However there is a specific synergetic effect in combination with an accessory part being attachable or attached to the interior element of the device: When the interior element is afloat on the liquid medium that is present in the aquarium it is much easier to attach an accessory part to the interior element, to remove the accessory part from the interior element or to exchange the accessory part against another accessory part. Preferably, the interior element and/or the accessory part are so constructed that the interior element is buoyant also when an accessory part is attached to it.

According to a further embodiment, the accessory part comprises an attachment portion configured for being attached to at least two, preferably essentially perpendicular sides of the interior element. In this way the accessory part may be fixedly attached to the interior element in a particular position. The at least two sides to which the interior element is attached to then serve as limit stop preventing the accessory part from slipping from the interior element. For example, the attachment portion may have a bracket-shape.

Preferably, the attachment portion is configured for being attached to at least two opposite lateral sides of the interior element, for example to the two long or to the two short lateral sides of the interior element if the interior element has a cuboid-like shape. In this way, the position of the accessory part may be fixedly defined with respect to the interior element in at least one direction.

According to a further embodiment, the accessory part comprises a functional component for equipping the device with an additional functional feature when the accessory part is attached to the interior element of the device. In this way, the interior element may be equipped with a desired technical function so that it is not necessary to buy a separate device with said technical function that has to be attached to the aquarium window. Furthermore, the interior element may be equipped with a function for times when it is not in use for cleaning so that it may remain within the aquarium.

According to a further embodiment, the functional component is a scraper. A scraper is used for removing stubborn dirt from an aquarium window. In particular, the scraper comprises a sharp edge to be slided over the aquarium windows for removing dirt. To this end, the accessory part is adapted to the interior element in such a way that, when the accessory part is attached to the interior element, the sharp edge is positioned in essentially the same plane as the side of the interior element for being attached to the aquarium window. In this way, the sharp edge comes into contact with the aquarium window when the interior element is attached to the aquarium window with said side.

According to a further embodiment, the functional component is a felt holder. A felt holder is used for fixedly positioning a felt or fabric on the side of the interior element to be attached to an aquarium window. Different aquarium window materials such as mineral glass or acrylic glass have to be cleaned with different cleaning felts or fabrics. For example, acrylic glass is more susceptible to scratches than mineral glass so that a softer material usually has to be used for cleaning acrylic aquarium windows. With a felt holder as the functional component, the same device may be used for cleaning different types of aquarium windows by attaching a suitable felt or fabric to the device in each case. In this way, it is not necessary to provide for separate devices for each aquarium window type. The felt holder preferably comprises clamps for clamping a felt to at least two opposite sides of the interior element, so that the felt or fabric may be fixedly attached thereto.

According to a further embodiment, the functional component is a feeder clip. A feeder clip serves for holding a piece of food and placing it within the aquarium for the creatures living therein. The feeder clip in particular comprises a clamp or clip for holding a piece of food. By using such an accessory part with the device, a separate feeder clip may be dispensed with.

It was found that a magnetically coupled two-part cleaning device is particularly suited for holding food since it may easily be detached from the window for exchanging food and it may be attached to the aquarium window at basically any position. Furthermore, the surface of the cleaning device is gentle on the window and does not cause unsightly marks on the windows like suction cups that are usually used for attaching food holders to an aquarium window. Also, whereas suction cups of conventional food holders wear out after about one month of use, the magnetically coupled cleaning device has a significantly longer lifetime so that frequent replacement of food holders becomes obsolete.

Further, lost food in aquariums creates problems with pollution and deteriorates the water quality. With a buoyant interior element of the device, the food cannot fall to the bottom or get lost in the aquarium background or rocks, the device helps to maintain the aquarium environment. There is therefore an advantageous synergetic effect when using an accessory part with food holder functionality together with a buoyant interior element.

According to a further embodiment the functional component is a cable holder. A cable holder serves to fixate cables or hoses at a particular position within the aquarium. In particular, the cable holder may comprise one or more channels into which cables or hoses may be inserted. The channels may have projections to securely hold the cable or hose within the channel.

Further features and advantages of the present invention will emerge from the following description of exemplary embodiments of the invention wherein reference is made to the drawing.

In the drawing
- Figs. 1a-b: show a schematic side view (Fig. 1a) and a schematic front view (Fig. 1b) of an exemplary embodiment of the device for cleaning aquarium windows according to the invention,
- Fig. 2: shows the situation, in which the device from Fig. 1 is attached to an aquarium window,
- Fig. 3: shows the situation, in which the device from Fig. 1 is detached from the aquarium window,
- Fig. 4a-c: show an exemplary embodiment of the accessory part with scraper functionality and of the kit of parts according to the invention,
- Fig. 5a-c: show a second exemplary embodiment of the accessory part with scraper functionality and of the kit of parts according to the invention,
- Fig. 6a-c: show a third exemplary embodiment of the accessory part with felt holder functionality and of the kit of parts according to the invention,
- Fig. 7a-c: show a fourth exemplary embodiment of the accessory part with food clip functionality and of the kit of parts according to the invention and
- Fig. 8a-c: show a fifth exemplary embodiment of the accessory part with cable holder functionality and of the kit of parts according to the invention.

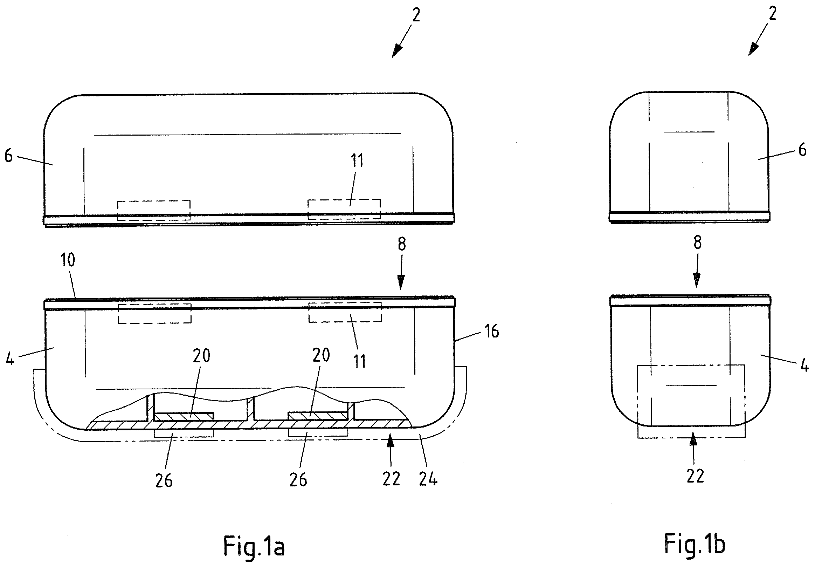

Fig. 1a-b show an exemplary embodiment of the device for cleaning aquarium windows. Fig. 1a shows a schematic side view and Fig. 1b shows a schematic front view of the device 2. The device 2 comprises an interior element 4, which is to be placed on the inside of the aquarium window, and an exterior element 6, which is to be placed on the outside of the aquarium. The side 8 for attaching the interior element 4 to the aquarium window may be provided with a fabric or felt 10 for cleaning the aquarium window.

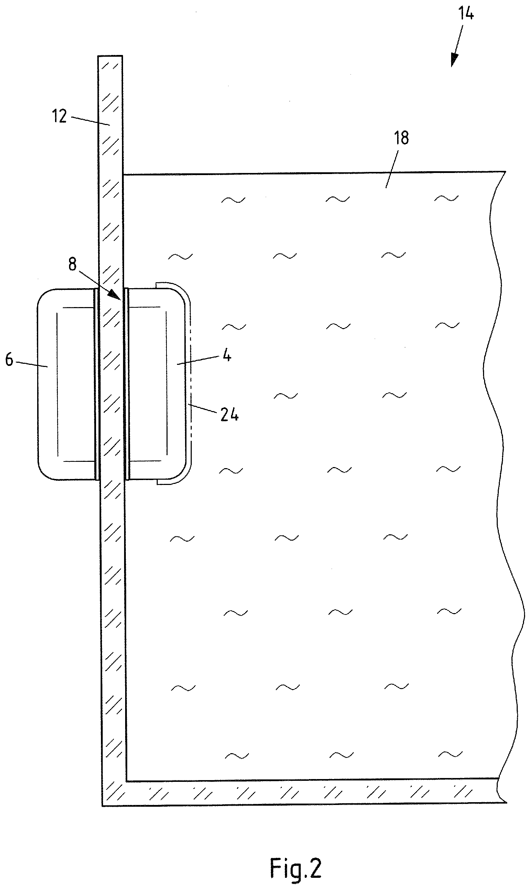

The interior element 4 and the exterior element 6 are each equipped with magnets and/or magnetic elements 11 arranged such that the two elements 4, 6 attract each other under the influence of magnetic force and movement of the exterior element 6 along an aquarium window causes the interior element 4 to follow this movement. Fig. 2 shows the situation in which the device 2 is attached to a window 12 of an aquarium 14. In the interior element 4, such magnets and/or magnetic elements may in particular be arranged inside the housing 16 of interior element 4 and close to the side 8 with which the interior element 4 is attached to the aquarium window.

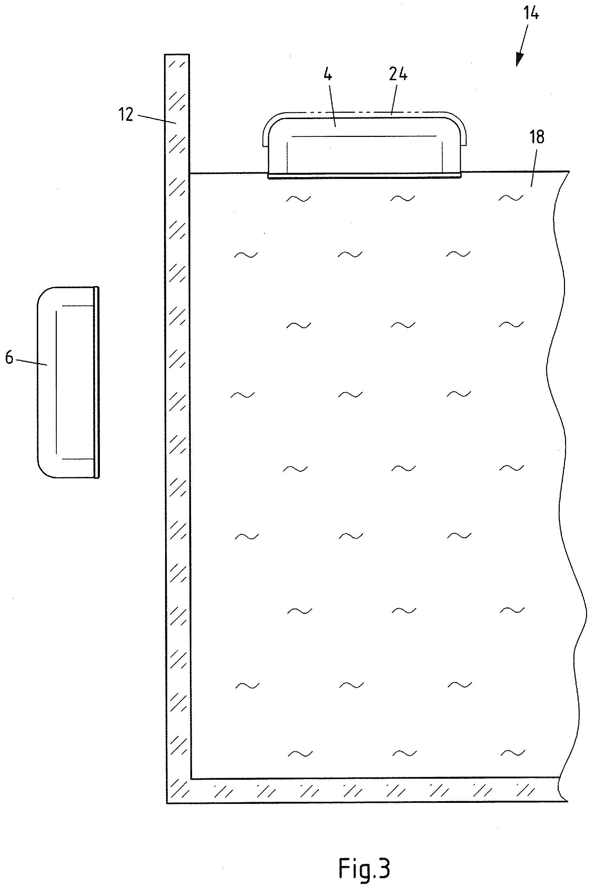

The interior element 4 is so constructed that, once the magnetic force has been removed, the interior element 4 will remain afloat on the liquid medium 18 that is present in the aquarium 14, in particular water. The interior element 4 may for example comprise an air chamber or may include a material with a density lower than the liquid medium 18 in order to obtain buoyancy. As shown in Fig. 3, by removing the exterior element 6, the interior element 4 rises to the surface of the liquid medium 18 and is therefore easily accessible.

Within the housing 16 of interior element 4, two magnets or magnetic elements 20 are arranged close to the back side 22 of interior element 4. For example, these elements 20 may be steel plates or permanent magnets. The two elements 20 are arranged such that an accessory part 24 (dashed-dotted lines in Fig. 1a-b) with corresponding magnets or magnetic elements 26 may be attached to the back-side 22 of the interior element 4 by magnetic force. In this way it is possible to equip interior element 4 with an extra technical feature by attaching thereto an according accessory part 24 that provides this extra technical feature. Furthermore, since the elements 20 are arranged inside the housing 16, they are invisible from the outside so that the interior element 4 has a smooth appearance even when no accessory part is attached to it.

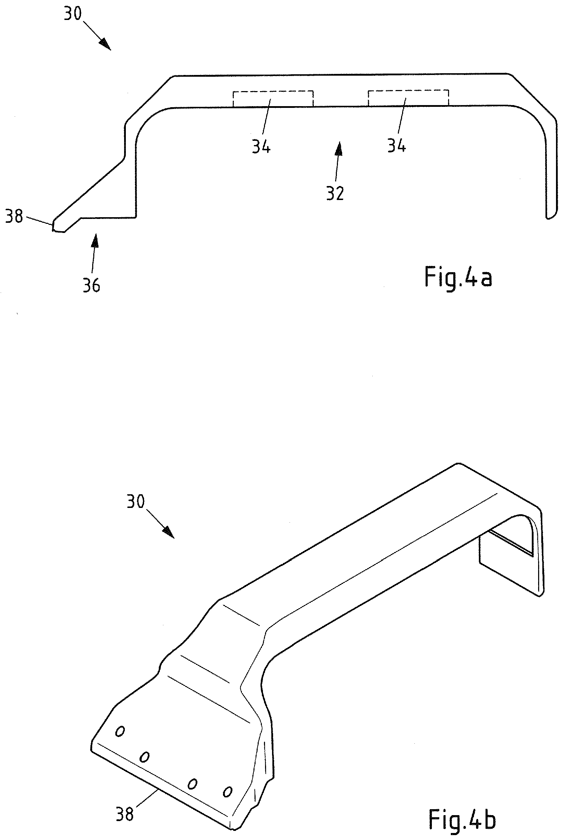

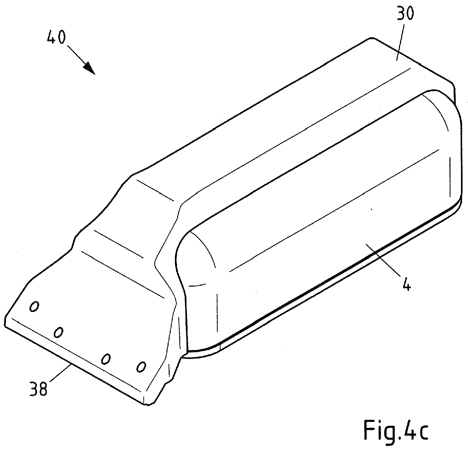

Several examples for suitable accessory parts will now be described with reference to Figs. 4 - 8. The device 2 and the respective accessory parts thereby form a kit of parts in each case.

Fig. 4a-c show a first exemplary embodiment of the accessory part and of the kit of parts, wherein Fig. 4a shows a side view and Fig. 4b a perspective view of the accessory part and Fig. 4c shows a perspective view of the kit of parts in an assembled state.

Accessory part 30 is configured to equip the interior element 4 of the device 2 with a scraper functionality, for example for removing stubborn dirt from an aquarium window. To this end, accessory part 30 comprises an attachment portion 32 in the shape of a bracket, the inner dimensions of which are adapted to the outer dimensions of interior element 4 such that the attachment portion 32 may be attached to three sides (the back side and the two short lateral sides) of the interior element 4 as shown in Fig. 4c. In this way, the accessory part 30 may be attached to the interior element 4 in a fixed position, in particular with respect to the lengthwise axis of the interior element 4 and the accessory part 30.

Attachment portion 32 is equipped with two magnets 34 that correspond to the two magnets or magnetic elements 20 of the interior element 4 so that the accessory part 30 is firmly held on the interior element 4 by magnetic force.

The accessory part 30 further comprises a functional component 36 in the form of a scraper. The scraper 36 comprises a sharp edge 38 which is arranged in the same plane as side 8 of the interior element 4 when the accessory part 30 is attached to the interior element 4 as shown in Fig. 4c. In this way, when interior element 4 is attached to aquarium window 12 with side 8, sharp edge 38 is in contact with the aquarium window 12 as well so that the sharp edge 38 removes dirt from the aquarium window 12 when the interior element 4 is moved over the window 12 by moving exterior element 6. Thus, device 2 or interior element 4, respectively, may be equipped with extra functionality by means of accessory part 30.

The device 2 and accessory part 30 adapted to it together form a kit of parts 40.

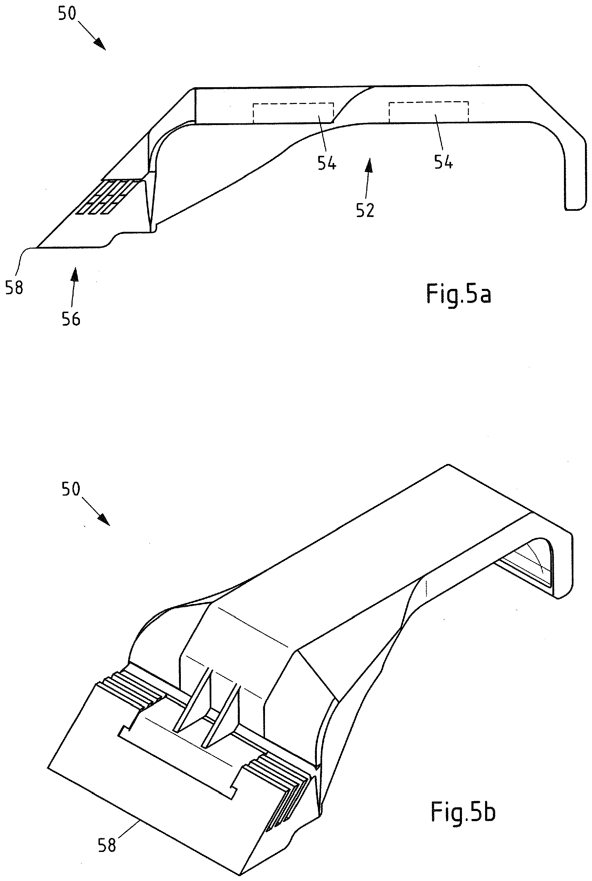

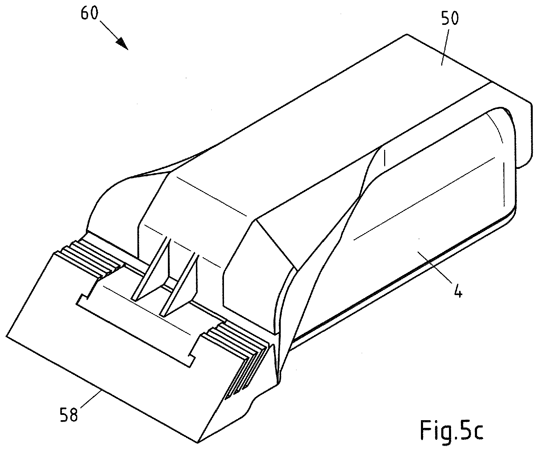

Fig. 5a-c show a second exemplary embodiment of the accessory part and of the kit of parts, wherein Fig. 5a shows a side view and Fig. 5b a perspective view of the accessory part and Fig. 5c shows a perspective view of the kit of parts in an assembled state.

Like accessory part 30, also accessory part 50 is configured to equip the interior element 4 of the device 2 with scraper functionality, for example for removing stubborn dirt from an aquarium window. Accessory part 50 differs from accessory part 30 in that the attachment portion 52 of accessory part 50 is broader than attachment portion 32 and encompasses the full width of interior element 4 so that attachment portion 52 may be attached to five sides (the back side, the two long and the two short lateral sides) of the interior element 4 as shown in Fig. 5c. In this way, the accessory part 30 may be attached to the interior element 4 in a fixed position not only along the lengthwise but also along the widthwise axis of interior element 4.

Also attachment portion 52 is equipped with two magnets 54 that correspond to the two magnets or magnetic elements 20 of the interior element 4 so that the accessory part 50 is firmly held on the interior element 4 by magnetic force.

The functional component 56 in the form of a scraper is also broader than the functional component 36 of accessory part 30 so that larger aquarium windows may be cleaned more efficiently. The sharp edge 58 of scraper 56 is again arranged in the same plane as side 8 of the interior element 4 when the accessory part 50 is attached to the interior element 4 as shown in Fig. 5c.

By means of accessory part 50, device 2 or interior element 4, respectively, may be equipped with extra functionality. The device 2 and accessory part 50 adapted to it together form a kit of parts 60.

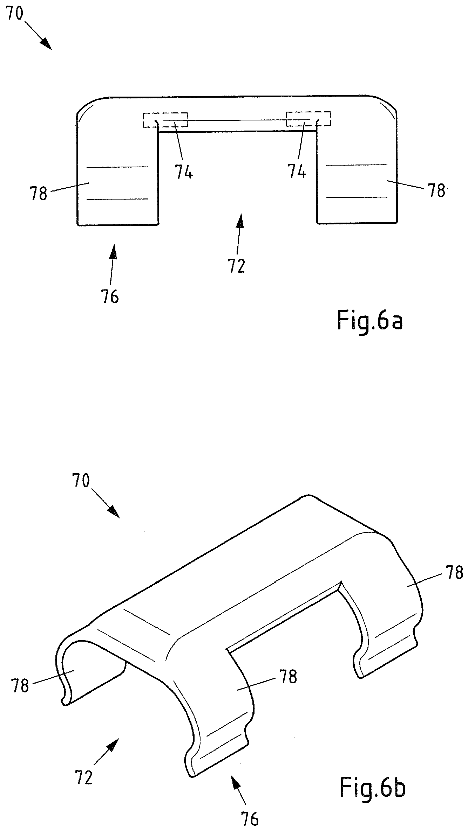

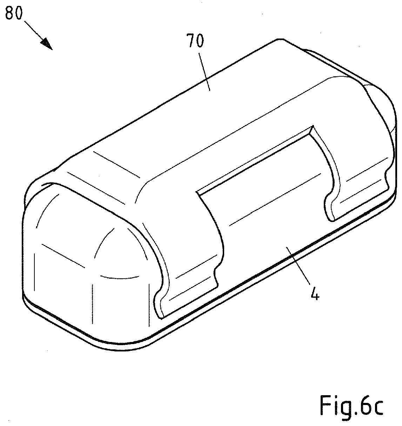

Fig. 6a-c show a third exemplary embodiment of the accessory part and of the kit of parts, wherein Fig. 6a shows a side view and Fig. 6b a perspective view of the accessory part and Fig. 6c shows a perspective view of the kit of parts in an assembled state.

Accessory part 70 is configured to equip the interior element 4 of the device 2 with a felt holder functionality, for example for attaching a Velcro felt to the side 8 of interior element 4 for cleaning acrylic aquarium windows. To this end, accessory part 70 comprises an attachment portion 72 in the shape of a bracket, the inner dimensions of which are adapted to the outer dimensions of interior element 4 such that the attachment portion 72 may be attached to three sides (the back side and the two long lateral sides) of the interior element 4 as shown in Fig. 6c. In this way, the accessory part 70 may be attached to the interior element 4 in a fixed position.

Attachment portion 72 is equipped with two magnets 74 that correspond to the two magnets or magnetic elements 20 of the interior element 4 so that the accessory part 70 is firmly held on the interior element 4 by magnetic force.

The accessory part 70 further comprises a functional component 76 in the form of a felt holder. The felt holder 76 comprises four clamps 78 for clamping a felt to the two long lateral sides of the interior element 4. As can be seen in Fig. 6c, the clamps 78 in this example have a double function. On the one hand they serve as functional component 76 and on the other hand they also form part of the attachment portion 72 by embracing two opposite lateral side edges of the interior element 4.

By means of accessory part 70, device 2 or interior element 4, respectively, may be equipped with extra functionality. The device 2 and accessory part 70 adapted to it together form a kit of parts 80.

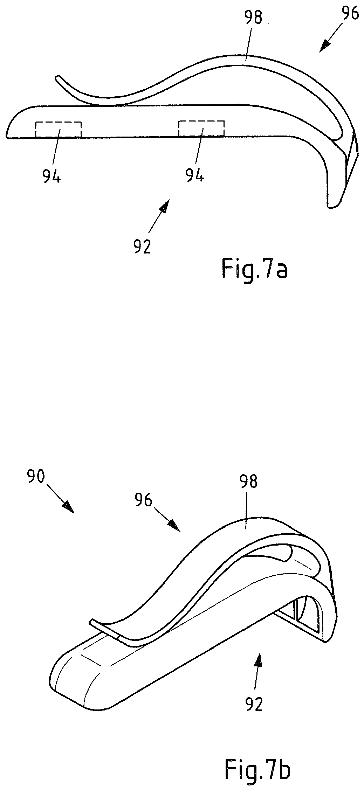

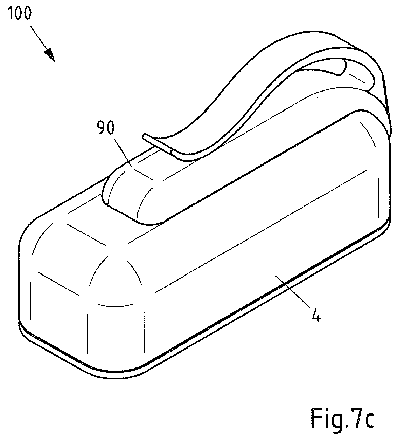

Fig. 7a-c show a fourth exemplary embodiment of the accessory part and of the kit of parts, wherein Fig. 7a shows a side view and Fig. 7b a perspective view of the accessory part and Fig. 7c shows a perspective view of the kit of parts in an assembled state.

Accessory part 90 is configured to equip the interior element 4 of the device 2 with a food clip functionality, for example for attaching a food piece to the interior element 4. To this end, accessory part 90 comprises an attachment portion 92 in the shape of a bracket, the inner dimensions of which are adapted to the outer dimensions of interior element 4 such that the attachment portion 92 may be attached to two sides (the back side and one short lateral side) of the interior element 4 as shown in Fig. 7c. In this way, the accessory part 90 may be attached to the interior element 4 in a fixed position.

Attachment portion 92 is equipped with two magnets 94 that correspond to the two magnets or magnetic elements 20 of the interior element 4 so that the accessory part 90 is firmly held on the interior element 4 by magnetic force.

The accessory part 90 further comprises a functional component 96 in the form of a food clip. The food clip 96 comprises a clip 98 for holding a piece of food.

Thus, device 2 or interior element 4, respectively, may be equipped with extra functionality by means of accessory part 90. The device 2 and accessory part 90 adapted to it together form a kit of parts 100.

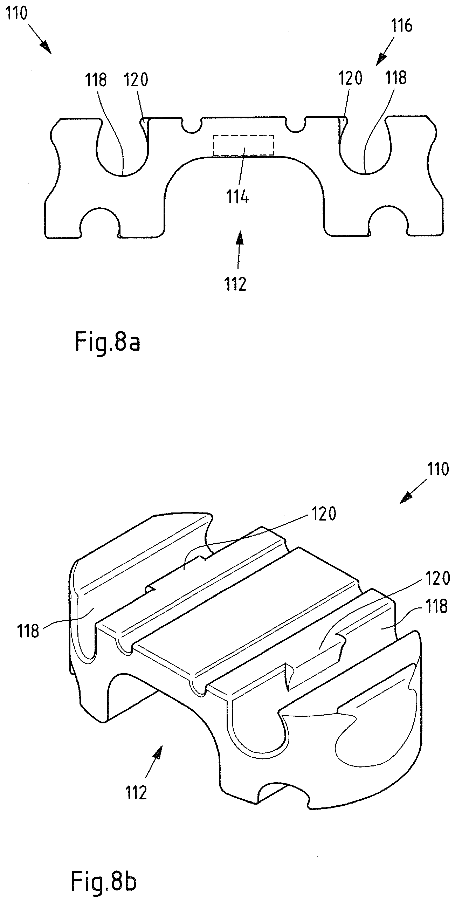

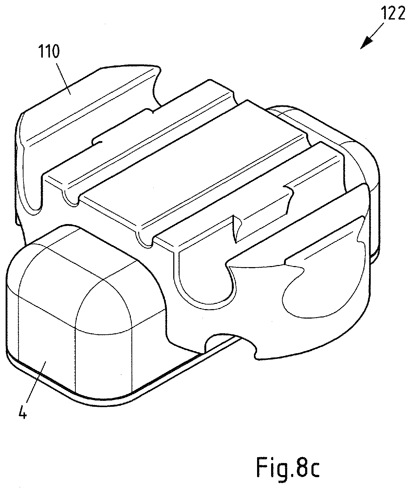

Fig. 8a-c show a fifth exemplary embodiment of the accessory part and of the kit of parts, wherein Fig. 8a shows a side view and Fig. 8b a perspective view of the accessory part and Fig. 8c shows a perspective view of the kit of parts in an assembled state.

Accessory part 110 is configured to equip the interior element 4 of the device 2 with a cable holder functionality, for example for holding cables or hoses of other components within the aquarium. To this end, accessory part 110 comprises an attachment portion 112 in the shape of a bracket, the inner dimensions of which are adapted to the outer dimensions of interior element 4 such that the attachment portion 112 may be attached to three sides (the back side and the two long lateral sides) of the interior element 4 as shown in Fig. 8c. In this way, the accessory part 110 may be attached to the interior element 4 in a fixed position.

Attachment portion 112 is equipped with two magnets 114 that correspond to the two magnets or magnetic elements 20 of the interior element 4 so that the accessory part 110 is firmly held on the interior element 4 by magnetic force.

The accessory part 110 further comprises a functional component 116 in the form of a cable holder. The cable holder 116 comprises two channels 118 into which cables or hoses may be inserted. The channels 118 have projections 120 to hold the cable or hose within the channel 118.

In this way, device 2 or interior element 4, respectively, may be equipped with extra functionality by means of accessory part 110. The device 2 and accessory part 110 adapted to it together form a kit of parts 122.

The examples described above show that the device 2 may be equipped with various extra functionality by attaching thereto a corresponding accessory part. There may also be provided a kit of parts comprising device 2 and two or more different accessory parts such as from accessory parts 30, 50, 70, 90 and 110 so that the device 2 may be equipped with different technical functionality as desired so that there is no need to buy separate components for each function.

There is a further synergetic effect when using a device with a buoyant interior element 4 that may be equipped with an accessory part as described herein: Since the buoyant interior element 4 is afloat on the water in an aquarium when not attached to the aquarium window, it is much easier to attach an accessory part to the interior element 4, to remove the accessory part from the interior element 4 or to exchange the accessory part with another accessory part.

## Claims

1. A device (2) for cleaning aquarium windows (12), in particular the inside thereof, comprising an interior element (4) with a housing (16), which interior element (4) is to be placed on the inside of the aquarium window (12), and an exterior element (6), which is to be placed on the outside of the aquarium window (12), which interior and exterior elements (4, 6) are each equipped with magnets and/or magnetic elements (11), wherein, in the interior element (4), such magnets and/or magnetic elements are arranged inside the housing and close to the side (8) for attaching the interior element (4) to the aquarium window, said magnets and/or magnetic elements (11) of the interior and exterior elements (4, 6) being arranged such that the interior and exterior elements (4, 6) attract each other under the influence of magnetic force, so that movement of the exterior element (6) along the aquarium window (12) causes the interior element (4) to follow this movement, wherein the interior element (4) comprises an air chamber and is so constructed that, once the magnetic force has been removed, the interior element (4) will remain afloat on the liquid medium (18) that is present in the aquarium (14), wherein the interior element (4) is configured such that an accessory part (24, 30, 50, 70, 90, 110) may be attached to the interior element (4) by magnetic force on a side (22) of the interior element (4) different to the side (8) for attaching the interior element (4) to the aquarium window (12), **characterized in that** the interior element (4) further comprises, for attaching said accessory part, a magnet or magnetic element (20) arranged within the housing (16) such that it is invisible from the outside and at a side (22) different to the side (8) for attaching the interior element to the aquarium window (12).

2. The device according to claim 1,
**characterized in that** the magnet or magnetic element (20) is arranged on a lateral side or on the back-side (22) of the interior element (4).

3. Kit of parts (40, 60, 80, 100, 122) comprising a device (2) according to claim 1 or 2 and an accessory part (24, 30, 50, 70, 90, 110) for being attached to the interior element (4) of the device (2), wherein the accessory part (24, 30, 50, 70, 90, 110) is configured such and adapted to the device (2) in such a way that the accessory part (24, 30, 50, 70, 90, 110) may be attached by magnetic force to the interior element (4) on a side (22) of the interior element (4) different to the side (8) for attaching the interior element (4) to the aquarium window (14).

4. Kit of parts according to claim 3,
**characterized in that** the device (2) and the accessory part (24, 30, 50, 70, 90, 110) comprise corresponding magnets and/or magnetic elements (20) for attaching the accessory part (24, 30, 50, 70, 90, 110) by magnetic force to the interior element (4) on a side (22) of the interior element (4) different to the side (8) for attaching the interior element (4) to the aquarium window (12).

5. Kit of parts according to claim 3 or 4,
**characterized in that** the accessory part (24, 30, 50, 70, 90, 110) comprises an attachment portion (32, 52, 72, 92, 112) configured for being attached to at least two, preferably essentially rectangular, sides of the interior element (4).

6. Kit of parts according to one of claims 3 to 5,
**characterized in that** the accessory part (24, 30, 50, 70, 90, 110) comprises a functional component (36, 56, 76, 96, 116) for equipping the device (2) with an additional functional feature when the accessory part (24, 30, 50, 70, 90, 110) is attached to the interior element (4) of the device (2).

7. Kit of parts according to one of claims 3 to 6,
**characterized in that** the functional component is a scraper (36, 56), a felt holder (76), a feeder clip (96), or a cable holder (116).

## Patentansprüche

1. Vorrichtung (2) zum Reinigen von Aquariumscheiben (12), insbesondere von deren Innenseite, umfassend ein Innenelement (4) mit einem Gehäuse (16), wobei das Innenelement (4) auf der Innenseite der Aquariumscheibe (12) zu platzieren ist, und ein Außenelement (6), das auf der Außenseite der Aquariumscheibe (12) zu platzieren ist, wobei das Innen- und das Außenelement (4, 6) jeweils mit Magneten und/oder magnetischen Elementen (11) versehen sind, wobei beim Innenelement (4) solche Magnete und/oder magnetischen Elemente innerhalb des Gehäuses und in der Nähe der Seite (8) zum Befestigen des Innenelements (4) an der Aquariumscheibe angeordnet sind, wobei die Magnete und/oder magnetischen Elemente (11) des Innen- und Außenelements (4, 6) so angeordnet sind, dass sich das Innen- und Außenelement (4, 6) unter der Wirkung von Magnetkraft gegenseitig anziehen, so dass eine Bewegung des Außenelements (6) entlang der Aquariumscheibe (12) bewirkt, dass das Innenelement (4) dieser Bewegung folgt, wobei das Innenelement (4) eine Luftkammer umfasst und so konstruiert ist, dass nach dem Wegnehmen der Magnetkraft das Innenelement (4) auf dem im Aquarium (14) vorhandenen flüssigen Medium (18) schwimmt,
wobei
das Innenelement (4) so konfiguriert ist, dass ein Zubehörteil (24, 30, 50, 70, 90, 110) durch Magnetkraft an einer Seite (22) des Innenelements (4) befestigt werden kann, die sich von der Seite (8) zum Befestigen des Innenelements (4) an der Aquariumscheibe (12) unterscheidet, **dadurch gekennzeichnet, dass** das Innenelement (4) ferner zum Befestigen des Zubehörteils einen Magneten oder ein magnetisches Element (20) umfasst, der/das innerhalb des Gehäuses (16) so angeordnet ist, dass er/es von der Außenseite nicht sichtbar ist, und auf einer Seite (22), die sich von der Seite (8) zum Befestigen des Innenelements an der Aquariumscheibe (12) unterscheidet.

2. Vorrichtung nach Anspruch 1,
**dadurch gekennzeichnet, dass** der Magnet oder das magnetische Element (20) auf einer lateralen Seite oder auf der Rückseite (22) des Innenelements (4) angeordnet ist.

3. Teilesatz (40, 60, 80, 100, 122), der eine Vorrichtung (2) nach Anspruch 1 oder 2 und ein Zubehörteil (24, 30, 50, 70, 90, 110) zum Befestigen am Innenelement (4) der Vorrichtung (2) umfasst, wobei das Zubehörteil (24, 30, 50, 70, 90, 110) so konfiguriert und an die Vorrichtung (2) angepasst ist, dass das Zubehörteil (24, 30, 50, 70, 90, 110) durch Magnetkraft am Innenelement (4) auf einer Seite (22) des Innenelements (4) befestigt werden kann, die sich von der Seite (8) zum Befestigen des Innenelements (4) an der Aquariumscheibe (14) unterscheidet.

4. Teilesatz nach Anspruch 3,
**dadurch gekennzeichnet, dass** die Vorrichtung (2) und das Zubehörteil (24, 30, 50, 70, 90, 110) entsprechende Magnete und/oder magnetische Elemente (20) zum Befestigen des Zubehörteils (24, 30, 50, 70, 90, 110) durch Magnetkraft am Innenelement (4) auf einer Seite (22) des Innenelements (4), die sich von der Seite (8) zum Befestigen des Innenelements (4) an der Aquariumscheibe (12) unterscheidet, umfassen.

5. Teilesatz nach Anspruch 3 oder 4,
**dadurch gekennzeichnet, dass** das Zubehörteil (24, 30, 50, 70, 90,110) einen Befestigungsabschnitt (32, 52, 72, 92, 112) umfasst, der so konfiguriert ist, dass er an wenigstens zwei, vorzugsweise im Wesentlichen rechteckigen, Seiten des Innenelements (4) befestigt wird.

6. Teilesatz nach einem der Ansprüche 3 bis 5,
**dadurch gekennzeichnet, dass** das Zubehörteil (24, 30, 50, 70, 90, 110) eine Funktionskomponente (36, 56, 76, 96, 116) zum Ausstatten der Vorrichtung (2) mit einer zusätzlichen Funktion umfasst, wenn das Zubehörteil (24, 30, 50, 70, 90,110) am Innenelement (4) der Vorrichtung (2) befestigt ist.

7. Teilesatz nach einem der Ansprüche 3 bis 6,
**dadurch gekennzeichnet, dass** die Funktionskomponente ein Abstreifer (36, 56), ein Filzhalter (76), eine Futterklammer (96) oder ein Kabelhalter (116) ist.

## Revendications

1. Dispositif (2) permettant de nettoyer des vitres d'aquarium (12), en particulier l'intérieur de celles-ci, comprenant un élément intérieur (4) muni d'un boîtier (16), ledit élément intérieur (4) est prévu pour être placé à l'intérieur de la vitre d'aquarium (12), et un élément extérieur (6) prévu pour être placé à l'extérieur de la vitre d'aquarium (12), lesdits éléments intérieur et extérieur (4, 6) étant chacun dotés d'aimants et/ou d'éléments magnétiques (11), où, dans l'élément intérieur (4), de tels aimants et/ou éléments magnétiques sont disposés à l'intérieur du boîtier et proches du côté (8) pour fixer l'élément intérieur (4) à la vitre d'aquarium, lesdits aimants et/ou éléments magnétiques (11) des éléments intérieur et extérieur (4, 6) étant disposés de manière à ce que les éléments intérieur et extérieur (4, 6) s'attirent mutuellement sous l'influence d'une force magnétique, de sorte que le mouvement de l'élément extérieur (6) le long de la vitre d'aquarium (12) amène l'élément intérieur (4) à suivre ce mouvement, où l'élément intérieur (4) comprend une chambre à air et est construit de telle sorte qu'une fois que la force magnétique a été supprimée, l'élément intérieur (4) restera à la surface du milieu liquide (18) qui est présent dans l'aquarium (14), où l'élément intérieur (4) est conçu de telle sorte qu'un accessoire (24, 30, 50, 70, 90, 110) puisse être fixé à l'élément intérieur (4) par une force magnétique sur un côté (22) de l'élément intérieur (4) différent du côté (8) servant à fixer l'élément intérieur (4) à la vitre d'aquarium (12),
**caractérisé en ce que**
l'élément intérieur (4) comprend en outre, pour la fixation dudit accessoire, un aimant ou un élément magnétique (20) disposé à l'intérieur du boîtier (16), de telle sorte qu'il est invisible depuis l'extérieur, et est disposé au niveau d'un côté (22) différent du côté (8) servant à fixer l'élément intérieur à la vitre d'aquarium (12).

2. Dispositif selon la revendication 1,
**caractérisé en ce que** l'aimant ou l'élément magnétique (20) est disposé sur un côté latéral ou sur le côté arrière (22) de l'élément intérieur (4).

3. Kit de pièces (40, 60, 80, 100, 122), comprenant un dispositif (2) selon la revendication 1 ou 2 et un accessoire (24, 30, 50, 70, 90, 110) destiné à être fixé à l'élément intérieur (4) du dispositif (2), l'accessoire (24, 30, 50, 70, 90, 110) étant conçu et adapté au dispositif (2) de telle sorte que l'accessoire (24, 30, 50, 70, 90, 110) peut être fixé par une force magnétique à l'élément intérieur (4) sur un côté (22) de l'élément intérieur (4) différent du côté (8) servant à fixer l'élément intérieur (4) à la vitre de l'aquarium (14).

4. Kit de pièces selon la revendication 3,
**caractérisé en ce que** le dispositif (2) et l'accessoire (24, 30, 50, 70, 90, 110) comprennent des aimants et/ou des éléments magnétiques (20) correspondants servant à fixer l'accessoire (24, 30, 50, 70, 90, 110) par une force magnétique à l'élément intérieur (4), sur un côté (22) de l'élément intérieur (4) différent du côté (8) servant à fixer l'élément intérieur (4) à la vitre d'aquarium (12).

5. Kit de pièces selon la revendication 3 ou 4,
**caractérisé en ce que** l'accessoire (24, 30, 50, 70, 90, 110) comprend une partie fixation (32, 52, 72, 92, 112) conçue pour être fixée à au moins deux côtés, de préférence essentiellement rectangulaires, de l'élément intérieur (4).

6. Kit de pièces selon l'une des revendications 3 à 5,
**caractérisé en ce que** l'accessoire (24, 30, 50, 70, 90,110) comprend un composant fonctionnel (36, 56, 76, 96, 116) servant à équiper le dispositif (2) avec une caractéristique fonctionnelle supplémentaire lorsque l'accessoire (24, 30, 50, 70, 90, 110) est fixé à l'élément intérieur (4) du dispositif (2).

7. Kit de pièces selon l'une des revendications 3 à 6,
**caractérisé en ce que** le composant fonctionnel est un racloir (36, 56), un porte-feutre (76), une pince à dispositif de distribution (96) ou un porte-câble (116).
